# EUROPEAN PATENT SPECIFICATION

(11) **EP 4 316 318 B1**
(45) Date of publication and mention of the grant of the patent: **22.04.2026**
(21) Application number: 21934620.2
(22) Date of filing: 01.12.2021
(51) Int. Cl.: A47J 31/44, A47J 31/38, A47J 31/36

(54) **LOCKING MECHANISM FOR COFFEE MACHINE, AND WORKING METHOD THEREFOR**
VERRIEGELUNGSMECHANISMUS FÜR KAFFEEMASCHINE UND ARBEITSVERFAHREN DAFÜR
MÉCANISME DE VERROUILLAGE POUR MACHINE À CAFÉ ET SON PROCÉDÉ DE FONCTIONNEMENT

(30) Priority: 30.03.2021 CN 202110339845
(43) Date of publication of application: 07.02.2024
(73) Proprietor: Zhuhai Hengqin Xinrun Intelligent Manufacturing Co., Ltd., Zhuhai, Guangdong 519031 (CN)
(72) Inventor: CHEN, Xiaolin, Zhuhai, Guangdong 519085 (CN); CHENG, Tao, Zhuhai, Guangdong 519085 (CN)
(74) Representative: Murgitroyd & Company
(86) International application number: PCT/CN2021/134794
(87) International publication number: WO 2022/205984

(56) References cited:
- EP-A1- 3 290 623
- CN-A- 102 273 946
- CN-A- 112 869 566
- CN-A- 113 040 605
- CN-U- 203 168 882
- CN-U- 203 168 882
- CN-U- 204 931 353
- CN-U- 212 066 496
- CN-U- 212 066 496
- CN-Y- 201 005 519
- CN-Y- 201 243 956
- US-A1- 2010 288 132
- US-A1- 2012 012 007
- US-B2- 9 462 910

## Description

### TECHNICAL FIELD

The present invention relates to the technical field of coffee machines, in particular to a locking mechanism for a coffee machine and a working method thereof.

### BACKGROUND

There are many ways to lock a position of a coffee machine for holding coffee on the market. Common ones include manual thread rotation locking and sliding locking. For example, US 9,462,910 B2 discloses a locking mechanism for a coffee machine comprising an operating element, a pressing cover assembly, and a support base, wherein the pressing cover assembly comprises a pressing block, a rotation locking disk, and a guiding member, the operating element being connected to the pressing block, the guiding member being arranged longitudinally, the pressing block being in sliding fit with the guiding member, the rotation locking disk being provided with a guiding connecting protrusion arranged obliquely, wherein the guiding connecting protrusion is located on a connecting plate, the pressing block driving the rotation locking disk to rotate with the guiding connecting protrusion, the rotation locking disk being provided with a locking block, and the support base being provided with a locking groove adapted to the locking block, the pressing block being sleeved on the guiding member. Although all of the above methods can achieve the locking function, they all have shortcomings in other aspects. For example, the manual thread rotation locking has better sealing performance, but the operation is not convenient enough, while the sliding locking is more convenient to operate, but the sealing performance is poor. Therefore, it cannot meet the requirements of consumers very well.

### SUMMARY

The object of the present invention is to provide a locking mechanism for a coffee machine according to claim 1 and a working method according to claim 9, wherein the locking mechanism can effectively achieve the locking function, is easy to be operated, and has good sealing performance, which can better meet the usage requirements of consumers. The invention is set out in the appended set of claims.

According to the locking mechanism of the coffee machine provided by the present invention, by lifting or pressing downward the operating plate, the pressing block is driven to move up and down along the guiding member arranged longitudinally, and the pressing block drives the rotation locking plate to rotate under the action of the guiding connecting position arranged obliquely, so that the locking block on the rotation locking plate and the locking groove on the support base are engaged or misaligned with each other, thereby achieving the locking and unlocking functions of the coffee machine. The entire operation process is very simple and convenient, and there is no need for frequent manual rotation to achieve the locking and unlocking functions. During the process of pressing down the operating plate, the rotation locking disk is subjected to the downward pressure of by the pressing block, so that the rotation locking disk is tightly pressed against the support base under a certain pressure condition, which improves the sealing performance of the locking mechanism.

### BRIEF DESCRIPTION OF THE DRAWINGS

The accompanying drawings herein show specific examples of the technical solution of the present invention, and form part of the specification with the specific embodiments, which is used to explain the technical solution, principle and effect of the present invention.

Unless otherwise specified or otherwise defined, the same reference numerals in different drawings represent the same or similar technical features, and different reference numerals may be used to represent the same or similar technical features.
FIG. 1 is a schematic view of a locking mechanism for a coffee machine in a locking state according to the embodiment of the present invention.
FIG. 2 is a schematic view the locking mechanism for the coffee machine in a unlocking state according to an embodiment of the present invention.
FIG. 3 is an exploded view of the locking mechanism for the coffee machine according to an embodiment of the present invention.
FIG. 4 is a schematic view of a rotation locking disk and a support base in a locking state according to an embodiment of the present invention.
FIG. 5 is a schematic view of the rotation locking disk and the support base in a unlocking state according to an embodiment of the present invention.
FIG. 6 is a schematic structural view of the coffee machine according to an embodiment of the present invention.

### Description of reference signs:

10. operating plate; 11. connecting lug; 12. connecting end; 13. operating end; 20. support base; 21. locking groove; 22. unlocking position; 23. placement position; 24. second connecting portion; 30. pressing block; 31. first through hole; 32. first connecting block; 33. second connecting block; 40. rotation locking disk; 41. locking block; 42. connecting plate; 43. guiding connecting position means; 44. first moving groove; 45. second moving groove; 50. guide column; 51. upper cover; 52. connecting column; 60. mounting plate; 61. second through hole; 62. third moving groove; 63. first connecting portion; 70. coffee container; 80. sealing ring; 90. housing; 91. coffee machine.

### DETAILED DESCRIPTION OF THE EMBODIMENTS

In order to facilitate understanding of the present invention, specific embodiments of the present invention will be described more fully below with reference to the accompanying drawings.

Unless otherwise specified or defined, all technical and scientific terms used herein have the same meaning as commonly understood by one of ordinary skill in the art. In the case of combining the actual scene of the technical solution of the present invention, all technical and scientific terms used herein may also have meanings corresponding to the purpose of achieving the technical solution of the present invention.

Unless otherwise specified or otherwise defined, the terms "first, second..." as used herein are used only to distinguish to distinguish the names, and does not represent a specific quantity or order.

Unless otherwise specified or otherwise defined, the term "and/or" includes any and all combinations of one or more of the associated listed items.

It should be noted that when an element is called "fixed to" another element, it may be directly fixed to another element or there may be intermediate elements. When an element is considered to be "connected to" another element, it may be directly connected to another element or intervening elements may also be present. When an element is considered to be "mounted to" another element, it may be directly mounted to another element or intervening elements may also be present. When an element is considered to be "provided on" another element, it may be directly disposed on another element or intervening elements may also be present.

Unless specifically stated or otherwise defined, the "said" and "the" used herein relate to the aforementioned technical feature or the technical content, the technical feature or technical content may be the same as or similar to the aforementioned technical feature or technical content.

It should be understood that technical contents or technical features that go against the purpose of the present invention, or are obviously contradictory, should be excluded.

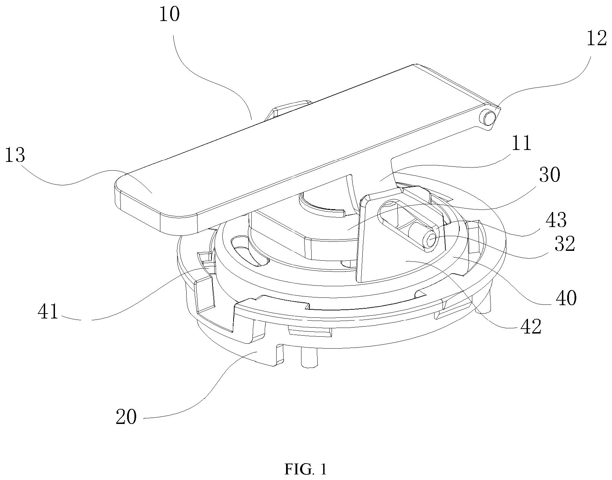

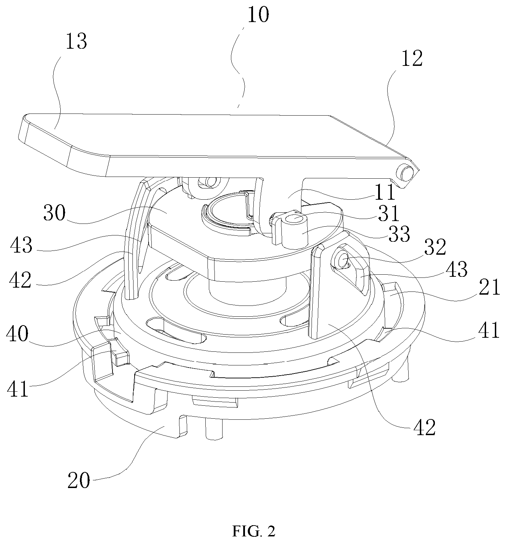

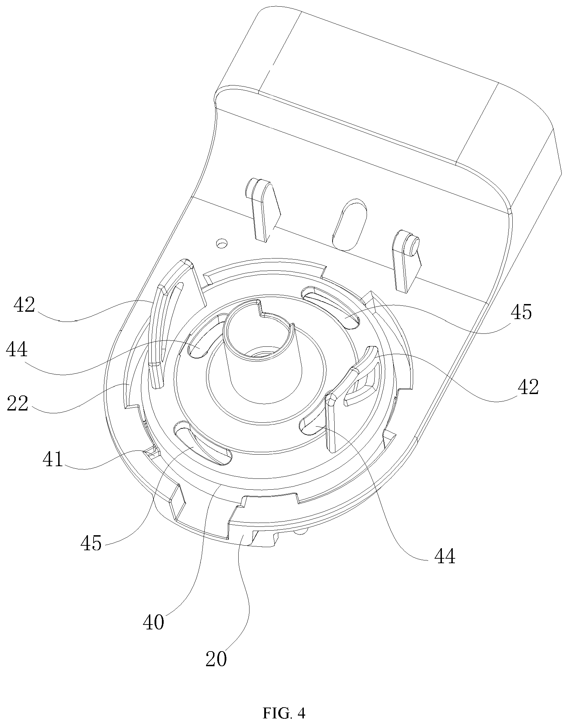

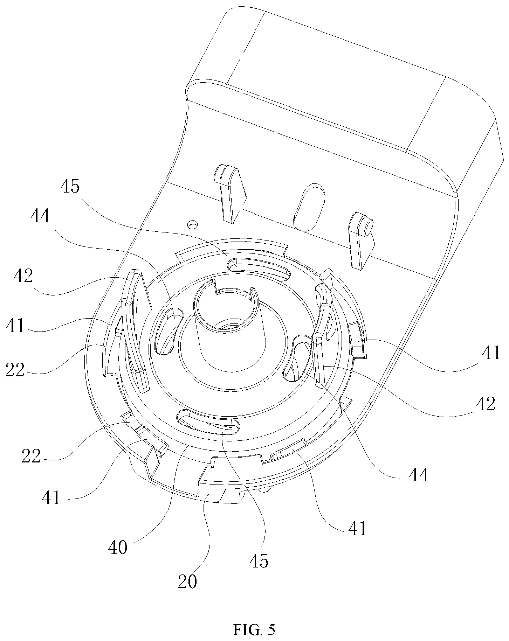

As shown in FIGs. 1 to 6, a locking mechanism for a coffee machine includes an operating plate 10, a pressing cover assembly, and a support base 20 mounted on the coffee machine 91. The pressing cover assembly includes a pressing block 30, a rotation locking disk 40, and a guiding member. The guiding member is a guide column 50, and the operating plate 10 is connected to the pressing block 30. In this embodiment, two guide columns 50 are provided and both are arranged longitudinally. The pressing block 30 is in sliding fit with the guide columns 50. The rotation locking disk 40 is provided with a guiding connecting position means 43 arranged obliquely. The pressing block 30 drives the rotation locking disk 40 to rotate through the guiding connecting position means 43. The rotation locking disk 40 is provided with a locking block 41, and the support base 20 is provided with a locking groove 21 adapted to the locking block 41. By connecting the operating plate 10 to the pressing block 30, moving the operating plate 10 can drive the pressing block 30 to move. Under the guidance of the guide column 50 arranged longitudinally, the pressing block 30 moves up and down along the guide column 50, and two guide columns 50 are provided to further restrict the pressing block 30 and prevent the pressing block 30 from rotating. During the movement of the pressing block 30, the pressing block 30 will exert a force on the rotation locking disk 40. Under the action of the guiding connecting position means 43 arranged obliquely, the rotation locking disk 40 can be driven to rotate by a certain angle, and the locking block 41 on the rotation locking disk 40 and the locking groove 21 on the support base 20 are engaged or misaligned with each other, so as to achieve locking and unlocking functions. When locking is achieved, the rotation locking disk 40 is subjected to a downward pressure from the pressing block 46, so that the rotation locking disk 40 tightly presses the support base 20 under a certain pressure condition, thus improving the sealing performance of the locking mechanism. The locking mechanism can effectively achieve locking and unlocking functions, the operation is simple without frequent manual rotation, and it has good sealing performance, which can better meet the usage requirements of consumers. It should be noted that the certain pressure condition refers to the pressure at which the rotation locking disk 40 can press the support base 20 but does not affect the normal rotation of the rotation locking disk 40.

The pressing block 30 is provided with a first through hole 31 adapted to the guide column 50. The pressing block 30 is sleeved on the guide column 50 through the first through hole 31. A connecting plate 42 is fixed on the rotation locking plate 40, and the guiding connecting position means 43 is located on the connecting plate 42 and extend throughs the connecting plate 42. Two connecting plates 42 are provided, and the two connecting plates 42 are arranged opposite to each other. A side wall of the pressing block 30 is provided with a first connecting block 32 adapted to the guiding connecting position means 43, and the first connection block 32 is in sliding fit with the guiding connecting position means 43. By sleeving the pressing block 30 on the guide column 50, the sliding fit between the pressing block 30 and the guide column 50 is achieved, and at the same time, the guide column 50 guides and restricts the pressing block 30. By providing the connecting plate 42 and providing the guiding connecting position means 43 on the connecting plate 42, the pressing block 30 is in sliding fit with the guiding connecting position means 43 through the first connecting block 32, so as to achieve the mounting connection between the pressing block 30 and the rotation locking disk 40, so that the pressing block 30 drives the rotation locking disk 40 to rotate. The two connecting plates 42 are arranged opposite to each other to ensure that the rotation locking disk 40 is evenly stressed, which facilitates the normal rotation of the rotation locking disk 40.

The pressing cover assembly further includes an upper cover 51 and a mounting plate 60. The pressing block 30 is located above the mounting plate 60, the upper cover 51 is located below the mounting plate 60, and the rotation locking disk 40 is located between the upper cover 51 and the mounting plate 60. The upper cover 51 is provided with a connecting column 52. The upper cover 51 is connected the mounting plate 60 by the connecting column 52 extending through the rotation locking disk 40 and is fixedly connected to the mounting plate 60 through screws. The guide column 50 is fixed on a side of the upper cover 51 adjacent to the rotation locking disk 40, and the guide column 50 extends through the rotation locking disk 40, the mounting plate 60, and the pressing block 30 successively. The guide column 50 is fixed to the upper cover 51, and the upper cover 51 is fixedly connected to the mounting plate 60, thereby ensuring that the pressing block 30 can smoothly move up and down along the guide column 50.

The mounting plate 60 is provided with a second through hole 61 adapted to the guide column 50. The second through hole 61 and the first through hole 31 are provided in up-down correspondence. The rotation locking disk 40 is provided with a first moving groove 44 that is adapted to the guide column 50 and a second moving groove 45 that is adapted to the connecting column 52. The first moving groove 44 and the second moving groove 45 both extend through the rotation locking disk 40, and the first moving groove 44 and the second moving groove 45 both extend along a circumferential direction of the rotation locking disk 40. In this embodiment, the distance between the first moving groove 44 and a center of the rotation locking disk 40 is different from the distance between the second moving groove 45 and the center of the rotation locking disk 40. By providing the second through hole 61 and the first through hole 31 on the mounting plate 60 in up-down correspondence, it is ensured that the guide column 50 can extend through the mounting plate 60 smoothly and the pressing block 30 can move smoothly on the guide column 50. By providing the first moving groove 44 and the second moving groove 45, and both moving grooves extend along the circumferential direction of the rotation locking plate 40, it is ensured that the guide column 50 and the connecting column 52 will not affect the normal rotation of the rotation locking disk 40 after extending through the rotation locking disk 40.

The mounting plate 60 is provided with a third moving groove 62 adapted to the connecting plate 42 on the rotation locking disk 40. The third moving groove 62 extends through the mounting plate 60, and the third moving groove 62 extends along a rotation direction of the rotation locking disk 40. The connecting plate 42 extends out of the moving groove. Through the above arrangement, when the rotation locking disk 40 rotates, the connecting plate 42 can rotate along the third moving groove 62, so as to ensure the normal rotation of the rotation locking disk 40.

A coffee container 70 is included. A placement position 23 adapted to the coffee container 70 is formed between the support base 20 and the upper cover 51. An edge of the upper cover 51 is arranged corresponding to an edge of the coffee container 70. The mounting plate 60 is provided with a first connecting portion 63, the support base 20 is provided with a second connecting portion 24, and the first connecting portion 63 is rotatably connected to the second connecting portion 24. The coffee container 70 is placed in the placement position 23, the pressing block 30 is pressed down, and the rotation locking disk 40 tightly presses the support base 20. At this time, the edge of the upper cover 51 tightly presses the edge of the coffee container 70, and a sealed cavity is formed between the upper cover 51 and the coffee container 70, so as to improve the sealing performance and prevent coffee from leaking from a gap between the upper cover 51 and the coffee container 70 during brewing. Since the mounting plate 60 is rotatably connected to the support base 20, when the plate 10 is lifted, the pressing block 30 moves upwards to an extreme position of the guiding connecting position 43, thus driving the rotation locking disk 40 to move upward, and then driving the mounting plate 60 to rotate, which is convenient for taking and placing the coffee container 70, and also more convenient for replacing a coffee powder packet.

A sealing ring 80 is provided between the upper cover 51 and the coffee container 70, and the sealing ring 80 is provided corresponding to the edge of the coffee container 70. By providing the sealing ring 80, the sealing between the upper cover 51 and the coffee container 70 is further improved. In addition, since the sealing ring 80 has a certain degree of flexibility, the sealing ring 80 can also prevent the upper cover 51 from bending and deforming the coffee container 70.

A plurality of locking blocks 41 are provided, and the plurality of locking blocks are fixed on a side wall of the rotation locking disk 40 and are evenly distributed along the circumferential direction of the rotation locking disk 40. A plurality of locking grooves 21 are provided, the plurality of locking grooves 21 correspond to the plurality of locking blocks 41 one-to-one, and an unlocking position 22 is formed by a depression between adjacent locking grooves 21. By providing the plurality of locking blocks 41 and locking grooves 21, when the rotation locking disk 40 rotates, the plurality of locking blocks 41 and the plurality of lock slots 21 are engaged with each other in one-to-one correspondence, so as to improve the stability of the locking between the rotation locking disk 40 and the support base 20. When rotating to the unlocking position 22, the rotation locking disk 40 is released from the support base 20 and can be taken out from the support base 20.

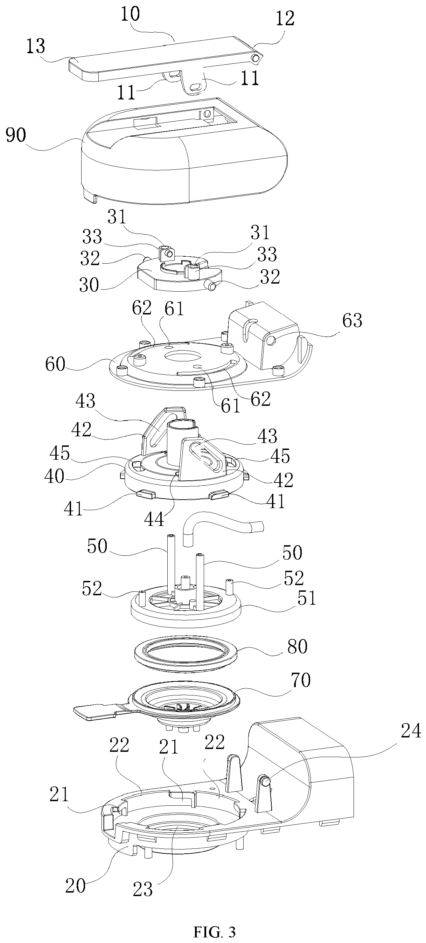

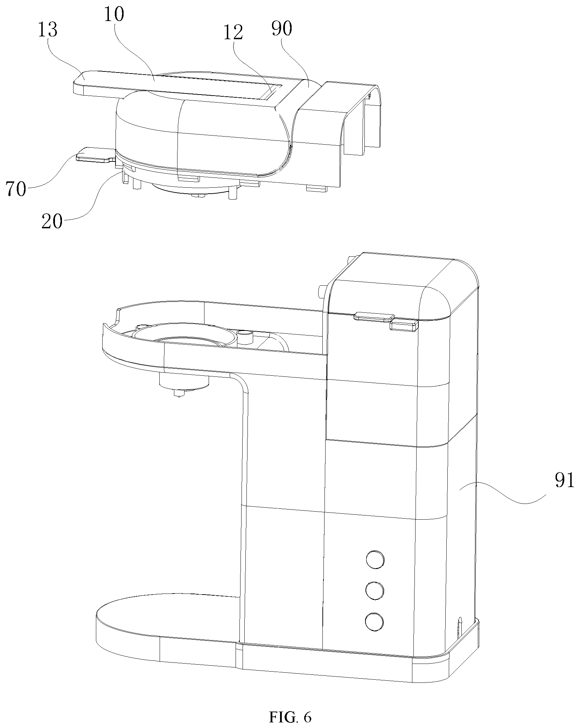

As shown in FIG. 3 and FIG. 6, a housing 90 is further included. The pressing cover assembly is located in the housing 90. An end of the operating plate 10 is a connecting end 12, and another end of the operating plate 10 is an operating end 13. The connecting end 12 of the operating plate 10 is rotatably connected to the housing 90 through a shaft-hole fit. A middle portion of the operating plate 10 is provided with a connecting lug 11, the pressing block 30 is provided with a second connecting block 33, and the connecting lug 11 and the second connecting block 33 also cooperate through a shaft hole fit to achieve a rotational connection. The housing 90 is mounted on the support base 20, and the locking and unlocking functions of the locking mechanism can be achieved by lifting or pressing the operating end 13 of the operating plate 10. There is no need to move the entire operating plate 10, which is more effort-saving and more convenient to operate. In addition, the housing 90 shields the internal components, which is beneficial to protect the internal components and at the same time improve the aesthetics of the coffee machine 91.

A working method of a locking mechanism for a coffee machine includes the following steps.

Locking function: the operating end 13 of the operating plate 10 is pressed downward, and the operating plate 10 drives the pressing block 30 to move downward along the two guide columns 50 arranged longitudinally.

Under an action of the guiding connecting position means 43 arranged obliquely and the guide column 50, the pressing block 30 keeps moving downward and exerts force on the rotation locking disk 40 to drive the rotation locking disk 40 to rotate.

When the pressing block 30 moves downward to the extreme position of the guiding connecting position means 43, the pressing block 30 maintains the downward movement trend, the rotation locking disk 40 is subject to the downward pressure from the pressing block 30, so that the rotation locking disk 40 tightly presses the support base 20.

After the rotation locking disk 40 rotates by a certain angle, the locking block 41 on the rotation locking disk 40 and the locking groove 21 on the support base 20 are engaged with each other to achieve the locking function.

Unlocking function: the operating end 13 of the operating plate 10 is lifted, and the operating plate 10 drives the pressing block 30 to move upward along the two guide columns 50 arranged longitudinally.

Under the action of the guiding connecting position means 43 arranged obliquely and the guide column 50, the pressing block 30 keeps moving upward and drives the rotation locking disk 40 to rotate reversely.

After the rotation locking disk 40 rotates reversely by a certain angle, the locking block 41 on the rotation locking disk 40 moves to the unlocking position 22 and is released from the support base 20 to achieve the unlocking function.

The working method of the locking mechanism for the coffee machine can effectively achieve the locking and unlocking functions, and the operation is very simple, which can effectively improve the work efficiency of replacing a coffee packet, meanwhile, the sealing performance of the mechanism can also be improved.

The locking mechanism for the coffee machine provided by the present invention can drive the pressing block 30 to move by moving the operating plate 10. Under the guidance of the guide column 50 arranged longitudinally, the pressing block 30 moves up and down along the guide column 50. During the movement of the pressing block 30, force will be exerted on the rotation locking disk 40. Under the action of the guiding connecting position means 43 arranged obliquely, the rotation locking disk 40 can be driven to rotate by a certain angle, and the locking block 41 on the rotation locking plate 40 and the locking groove 21 on the support base 20 are engaged or misaligned with each other, so as to achieve the locking and unlocking functions. When locking is achieved, the rotation locking disk 40 is subjected to downward pressure from the pressing block 46, so that the rotation locking disk 40 tightly presses the support base 20 under a certain pressure condition, thus improving the sealing performance of the locking mechanism. Therefore, the locking mechanism can effectively achieve locking and unlocking functions, is very convenient to operate without frequent manual rotation, which is convenient for improving work efficiency. It also has good sealing performance and can better meet the usage requirements of consumers.

The purpose of the above embodiments is to reproduce and deduce the technical solution of the present invention as an example, and to fully describe the technical solution, purpose and effect of the present invention, and to enable the public to understand the present invention more thoroughly.

## Claims

1. A locking mechanism for a coffee machine (91), comprising an operating plate (10), a pressing cover assembly, and a support base (20), wherein the pressing cover assembly comprises a pressing block (30), a rotation locking disk (40), and a guiding member, the operating plate (10) is connected to the pressing block (30), the guiding member is arranged longitudinally, the pressing block (30) is in sliding fit with the guiding member, the rotation locking disk (40) is provided with a guiding connecting position arranged obliquely, wherein the guiding connecting position means (43) is located on a connecting plate (42); the pressing block (30) drives the rotation locking disk (40) to rotate with the guiding connecting position means (43), the rotation locking disk (40) is provided with a locking block (41), and the support base (20) is provided with a locking groove (21) adapted to the locking block (41); wherein the pressing block (30) is provided with a first through hole (31) adapted to the guiding member, the pressing block (30) is sleeved on the guiding member through the first through hole (31), the connecting plate (42) is fixed on the rotation locking disk (40), a side wall of the pressing block (30) is provided with a first connecting block (32) adapted to the guiding connecting position means (43), and the first connection block (32) is in sliding fit with the guiding connecting position means (43).

2. The locking mechanism for the coffee machine according to claim 1, wherein the pressing cover assembly further comprises an upper cover (51) and a mounting plate (60), the pressing block (30) is located above the mounting plate (60), the upper cover (51) is located below the mounting plate (60), the rotation locking disk (40) is located between the upper cover (51) and the mounting plate (60), the upper cover (51) is provided with a connecting column (52), the upper cover (51) is connected to the mounting plate (60) by the connecting column (52) extending through the rotation locking disk (40), the guiding member is a guide column (50) fixed on a side of the upper cover (51) adjacent to the rotation locking disk (40), and the guide column (50) extends through the rotation locking disk (40), the mounting plate (60), and the pressing block (30) successively.

3. The locking mechanism for the coffee machine according to claim 2, wherein the mounting plate (60) is provided with a second through hole (61) adapted to the guide column (50), the second through hole (61) and the first through hole (31) are provided in up-down correspondence, the rotation locking disk (40) is provided with a first moving groove (44) adapted to the guide column (50) and a second moving groove (45) adapted to the connecting column (52), the first moving groove (44) and the second moving groove (45) both extend through the rotation locking disk (40), and the first moving groove (44) and the second moving groove (45) both extend along a circumferential direction of the rotation locking disk (40).

4. The locking mechanism for the coffee machine according to claim 3, wherein the mounting plate (60) is provided with a third moving groove (62) adapted to the connecting plate (42) on the rotation locking disk (40), the third moving groove (62) extends through the mounting plate (60), the third moving groove (62) extends along a rotation direction of the rotation locking disk (40), and the connecting plate (42) extends out of the moving groove.

5. The locking mechanism for the coffee machine according to claim 4, further comprising a coffee container (70), wherein a placement position adapted to the coffee container (70) is formed between the support base (20) and the upper cover, the mounting plate (60) is provided with a first connecting portion (63), the support base is provided with a second connecting portion (24), and the first connecting portion (63) is rotatably connected to the second connecting portion (24).

6. The locking mechanism for the coffee machine according to claim 5, wherein a sealing ring (80) is provided between the upper cover (51) and the coffee container (70), and the sealing ring (80) is provided corresponding to an edge of the coffee container (70).

7. The locking mechanism for the coffee machine according to any one of claims 1 to 6, wherein a plurality of locking blocks (41) are provided, the plurality of locking blocks (41) are fixed on a side wall of the rotation locking disk (40) and are evenly distributed along a circumferential direction of the rotation locking disk (40), a plurality of locking grooves (21) are provided, the plurality of locking grooves (21) are in one-to-one correspondence with the plurality of locking blocks (41), and a unlocking position is formed by a depression between adjacent locking grooves (21).

8. The locking mechanism for the coffee machine according to any one of claims 1 to 6, further comprising a housing (90), wherein the pressing cover assembly is located in the housing (90), an end of the operating plate (10) is a connecting end (12), and another end thereof is an operating end (13), the connecting end (12) of the operating plate (10) is rotatably connected to the housing (90), a middle portion of the operating plate (10) is provided with a connecting lug (11), the pressing block (30) is provided with a second connecting block (33), and the connecting lug (11) is rotatably connected to the second connecting block (33).

9. A working method of a locking mechanism of claim 1 for a coffee machine, comprising the following steps:
pressing an operating plate (10) downward to drive a pressing block (30) to move downward along a guiding member arranged longitudinally;
keeping the pressing block (30) moving downward under an action of a guiding connecting position arranged obliquely and a guiding member, and exerting force on a rotation locking disk (40) to drive the rotation locking disk (40) to rotate;
being subjected to a downward pressure by the rotation locking disk (40) from the pressing block (30) during a downward movement of the pressing block (30), pressing the rotation locking disk (40) on the support base (20); and
after the rotation locking disk (40) rotates, engaging the locking block (41) on the rotation locking disk (40) and the locking groove (21) on the support base (20) with each other to lock the coffee machine (91).

## Patentansprüche

1. Ein Verriegelungsmechanismus für eine Kaffeemaschine (91), beinhaltend eine Betätigungsplatte (10), eine Druckabdeckungsanordnung und eine Trägerbasis (20), wobei die Druckabdeckungsanordnung einen Druckblock (30), eine Drehverriegelungsscheibe (40) und ein Führungselement beinhaltet, die Betätigungsplatte (10) mit dem Druckblock (30) verbunden ist, das Führungselement in Längsrichtung angeordnet ist, der Druckblock (30) in Gleitpassung mit dem Führungselement ist, die Drehverriegelungsscheibe (40) mit einer schräg angeordneten Führungsverbindungsposition versehen ist, wobei sich das Führungsverbindungspositionsmittel (43) auf einer Verbindungsplatte (42) befindet; der Druckblock (30) die Drehverriegelungsscheibe (40) antreibt, sich mit dem Führungsverbindungspositionsmittel (43) zu drehen, die Drehverriegelungsscheibe (40) mit einem Verriegelungsblock (41) versehen ist und die Trägerbasis (20) mit einer Verriegelungsrille (21) versehen ist, die an den Verriegelungsblock (41) angepasst ist; wobei der Druckblock (30) mit einem ersten Durchgangsloch (31) versehen ist, das an das Führungselement angepasst ist, der Druckblock (30) durch das erste Durchgangsloch (31) auf das Führungselement gesteckt ist, die Verbindungsplatte (42) auf der Drehverriegelungsscheibe (40) fixiert ist, eine Seitenwand des Druckblocks (30) mit einem ersten Verbindungsblock (32) versehen ist, der an das Führungsverbindungspositionsmittel (43) angepasst ist, und der erste Verbindungsblock (32) in Gleitpassung mit dem Führungsverbindungspositionsmittel (43) ist.

2. Verriegelungsmechanismus für die Kaffeemaschine gemäß Anspruch 1, wobei die Druckabdeckungsanordnung ferner eine obere Abdeckung (51) und eine Montageplatte (60) beinhaltet, sich der Druckblock (30) über der Montageplatte (60) befindet, sich die obere Abdeckung (51) unter der Montageplatte (60) befindet, sich die Drehverriegelungsscheibe (40) zwischen der oberen Abdeckung (51) und der Montageplatte (60) befindet, die obere Abdeckung (51) mit einer Verbindungssäule (52) versehen ist, die obere Abdeckung (51) durch die Verbindungssäule (52), die sich durch die Drehverriegelungsscheibe (40) erstreckt, mit der Montageplatte (60) verbunden ist, das Führungselement eine Führungssäule (50) ist, die auf einer an die Drehverriegelungsscheibe (40) angrenzenden Seite der oberen Abdeckung (51) fixiert ist, und sich die Führungssäule (50) nacheinander durch die Drehverriegelungsscheibe (40), die Montageplatte (60) und den Druckblock (30) erstreckt.

3. Verriegelungsmechanismus für die Kaffeemaschine gemäß Anspruch 2, wobei die Montageplatte (60) mit einem zweiten Durchgangsloch (61) versehen ist, das an die Führungssäule (50) angepasst ist, das zweite Durchgangsloch (61) und das erste Durchgangsloch (31) in einer Oben-Unten-Entsprechung bereitgestellt sind, die Drehverriegelungsscheibe (40) mit einer ersten Bewegungsrille (44), die an die Führungssäule (50) angepasst ist, und einer zweiten Bewegungsrille (45), die an die Verbindungssäule (52) angepasst ist, versehen ist, sich sowohl die erste Bewegungsrille (44) als auch die zweite Bewegungsrille (45) durch die Drehverriegelungsscheibe (40) erstrecken und sich sowohl die erste Bewegungsrille (44) als auch die zweite Bewegungsrille (45) entlang einer Umfangsrichtung der Drehverriegelungsscheibe (40) erstrecken.

4. Verriegelungsmechanismus für die Kaffeemaschine gemäß Anspruch 3, wobei die Montageplatte (60) mit einer dritten Bewegungsrille (62) versehen ist, die an die Verbindungsplatte (42) auf der Drehverriegelungsscheibe (40) angepasst ist, sich die dritte Bewegungsrille (62) durch die Montageplatte (60) erstreckt, sich die dritte Bewegungsrille (62) entlang einer Drehrichtung der Drehverriegelungsscheibe (40) erstreckt und sich die Verbindungsplatte (42) aus der Bewegungsrille heraus erstreckt.

5. Verriegelungsmechanismus für die Kaffeemaschine gemäß Anspruch 4, ferner beinhaltend einen Kaffeebehälter (70), wobei eine an den Kaffeebehälter (70) angepasste Platzierungsposition zwischen der Trägerbasis (20) und der oberen Abdeckung gebildet ist, die Montageplatte (60) mit einem ersten Verbindungsabschnitt (63) versehen ist, die Trägerbasis mit einem zweiten Verbindungsabschnitt (24) versehen ist und der erste Verbindungsabschnitt (63) drehbar mit dem zweiten Verbindungsabschnitt (24) verbunden ist.

6. Verriegelungsmechanismus für die Kaffeemaschine gemäß Anspruch 5, wobei ein Dichtungsring (80) zwischen der oberen Abdeckung (51) und dem Kaffeebehälter (70) bereitgestellt ist und der Dichtungsring (80) entsprechend einer Kante des Kaffeebehälters (70) bereitgestellt ist.

7. Verriegelungsmechanismus für die Kaffeemaschine gemäß einem der Ansprüche 1 bis 6, wobei eine Vielzahl von Verriegelungsblöcken (41) bereitgestellt ist, die Vielzahl von Verriegelungsblöcken (41) auf einer Seitenwand der Drehverriegelungsscheibe (40) fixiert ist und gleichmäßig entlang einer Umfangsrichtung der Drehverriegelungsscheibe (40) verteilt ist, eine Vielzahl von Verriegelungsrillen (21) bereitgestellt ist, die Vielzahl von Verriegelungsrillen (21) in einer Eins-zu-Eins-Entsprechung mit der Vielzahl von Verriegelungsblöcken (41) ist und eine Entriegelungsposition durch eine Vertiefung zwischen benachbarten Verriegelungsrillen (21) gebildet ist.

8. Verriegelungsmechanismus für die Kaffeemaschine gemäß einem der Ansprüche 1 bis 6, ferner beinhaltend ein Gehäuse (90), wobei sich die Druckabdeckungsanordnung in dem Gehäuse (90) befindet, ein Ende der Betätigungsplatte (10) ein Verbindungsende (12) ist und ein anderes Ende davon ein Betätigungsende (13) ist, das Verbindungsende (12) der Betätigungsplatte (10) drehbar mit dem Gehäuse (90) verbunden ist, ein mittlerer Abschnitt der Betätigungsplatte (10) mit einer Verbindungslasche (11) versehen ist, der Druckblock (30) mit einem zweiten Verbindungsblock (33) versehen ist und die Verbindungslasche (11) drehbar mit dem zweiten Verbindungsblock (33) verbunden ist.

9. Ein Arbeitsverfahren eines Verriegelungsmechanismus gemäß Anspruch 1 für eine Kaffeemaschine, beinhaltend die folgenden Schritte:
Abwärtsdrücken einer Betätigungsplatte (10), um einen Druckblock (30) anzutreiben, sich entlang eines in Längsrichtung angeordneten Führungselements abwärts zu bewegen;
Halten des Druckblocks (30) in Abwärtsbewegung unter einer Wirkung einer schräg angeordneten Führungsverbindungsposition und eines Führungselements und Ausüben einer Kraft auf eine Drehverriegelungsscheibe (40), um die Drehverriegelungsscheibe (40) anzutreiben, sich zu drehen;
einem Abwärtsdruck durch die Drehverriegelungsscheibe (40) von dem Druckblock (30) während einer Abwärtsbewegung des Druckblocks (30) ausgesetzt, Drücken der Drehverriegelungsscheibe (40) auf die Trägerbasis (20); und
nachdem sich die Drehverriegelungsscheibe (40) gedreht hat, Miteinander-in-Eingriff-Bringen des Verriegelungsblocks (41) auf der Drehverriegelungsscheibe (40) und der Verriegelungsrille (21) auf der Trägerbasis (20), um die Kaffeemaschine (91) zu verriegeln.

## Revendications

1. Un mécanisme de verrouillage pour une machine à café (91), comprenant une plaque de commande (10), un ensemble couvercle de pression, et une base de support (20), dans lequel l'ensemble couvercle de pression comprend un bloc de pression (30), un disque de verrouillage de rotation (40), et un élément de guidage, la plaque de commande (10) est reliée au bloc de pression (30), l'élément de guidage est agencé longitudinalement, le bloc de pression (30) est en ajustement coulissant avec l'élément de guidage, le disque de verrouillage de rotation (40) est pourvu d'une position de liaison de guidage agencée obliquement, dans lequel le moyen de positionnement de liaison de guidage (43) est situé sur une plaque de liaison (42) ; le bloc de pression (30) entraîne le disque de verrouillage de rotation (40) afin qu'il tourne avec le moyen de positionnement de liaison de guidage (43), le disque de verrouillage de rotation (40) est pourvu d'un bloc de verrouillage (41), et la base de support (20) est pourvue d'une rainure de verrouillage (21) adaptée au bloc de verrouillage (41) ;
dans lequel le bloc de pression (30) est pourvu d'un premier trou traversant (31) adapté à l'élément de guidage, le bloc de pression (30) est emmanché sur l'élément de guidage à travers le premier trou traversant (31), la plaque de liaison (42) est fixée sur le disque de verrouillage de rotation (40), une paroi latérale du bloc de pression (30) est pourvue d'un premier bloc de liaison (32) adapté au moyen de positionnement de liaison de guidage (43), et le premier bloc de liaison (32) est en ajustement coulissant avec le moyen de positionnement de liaison de guidage (43).

2. Le mécanisme de verrouillage pour la machine à café selon la revendication 1, dans lequel l'ensemble couvercle de pression comprend en outre un couvercle supérieur (51) et une plaque de montage (60), le bloc de pression (30) est situé au-dessus de la plaque de montage (60), le couvercle supérieur (51) est situé au-dessous de la plaque de montage (60), le disque de verrouillage de rotation (40) est situé entre le couvercle supérieur (51) et la plaque de montage (60), le couvercle supérieur (51) est pourvu d'une colonne de liaison (52), le couvercle supérieur (51) est relié à la plaque de montage (60) par la colonne de liaison (52) s'étendant à travers le disque de verrouillage de rotation (40), l'élément de guidage est une colonne de guidage (50) fixée sur un côté du couvercle supérieur (51) adjacent au disque de verrouillage de rotation (40), et la colonne de guidage (50) s'étend à travers le disque de verrouillage de rotation (40), la plaque de montage (60), et le bloc de pression (30) successivement.

3. Le mécanisme de verrouillage pour la machine à café selon la revendication 2, dans lequel la plaque de montage (60) est pourvue d'un deuxième trou traversant (61) adapté à la colonne de guidage (50), le deuxième trou traversant (61) et le premier trou traversant (31) sont prévus en correspondance haut-bas, le disque de verrouillage de rotation (40) est pourvu d'une première rainure de déplacement (44) adaptée à la colonne de guidage (50) et d'une deuxième rainure de déplacement (45) adaptée à la colonne de liaison (52), la première rainure de déplacement (44) et la deuxième rainure de déplacement (45) s'étendent toutes les deux à travers le disque de verrouillage de rotation (40), et la première rainure de déplacement (44) et la deuxième rainure de déplacement (45) s'étendent toutes les deux le long d'une direction circonférentielle du disque de verrouillage de rotation (40).

4. Le mécanisme de verrouillage pour la machine à café selon la revendication 3, dans lequel la plaque de montage (60) est pourvue d'une troisième rainure de déplacement (62) adaptée à la plaque de liaison (42) sur le disque de verrouillage de rotation (40), la troisième rainure de déplacement (62) s'étend à travers la plaque de montage (60), la troisième rainure de déplacement (62) s'étend le long d'une direction de rotation du disque de verrouillage de rotation (40), et la plaque de liaison (42) s'étend en dehors de la rainure de déplacement.

5. Le mécanisme de verrouillage pour la machine à café selon la revendication 4, comprenant en outre un réservoir à café (70), dans lequel une position de mise en place adaptée au réservoir à café (70) est formée entre la base de support (20) et le couvercle supérieur, la plaque de montage (60) est pourvue d'une première portion de liaison (63), la base de support est pourvue d'une deuxième portion de liaison (24), et la première portion de liaison (63) est reliée de manière à pouvoir tourner à la deuxième portion de liaison (24).

6. Le mécanisme de verrouillage pour la machine à café selon la revendication 5, dans lequel une bague d'étanchéité (80) est prévue entre le couvercle supérieur (51) et le réservoir à café (70), et la bague d'étanchéité (80) est prévue en correspondance avec un bord du réservoir à café (70).

7. Le mécanisme de verrouillage pour la machine à café selon l'une quelconque des revendications 1 à 6, dans lequel une pluralité de blocs de verrouillage (41) sont prévus, la pluralité de blocs de verrouillage (41) sont fixés sur une paroi latérale du disque de verrouillage de rotation (40) et sont uniformément distribués le long d'une direction circonférentielle du disque de verrouillage de rotation (40), une pluralité de rainures de verrouillage (21) sont prévues, la pluralité de rainures de verrouillage (21) sont en correspondance biunivoque avec la pluralité de blocs de verrouillage (41), et une position de déverrouillage est formée par un creux entre des rainures de verrouillage (21) adjacentes.

8. Le mécanisme de verrouillage pour la machine à café selon l'une quelconque des revendications 1 à 6, comprenant en outre un logement (90), dans lequel l'ensemble couvercle de pression est situé dans le logement (90), une extrémité de la plaque de commande (10) est une extrémité de liaison (12), et une autre extrémité de celle-ci est une extrémité de commande (13), l'extrémité de liaison (12) de la plaque de commande (10) est reliée de manière à pouvoir tourner au logement (90), une portion médiane de la plaque de commande (10) est pourvue d'un tenon de liaison (11), le bloc de pression (30) est pourvu d'un deuxième bloc de liaison (33), et le tenon de liaison (11) est relié de manière à pouvoir tourner au deuxième bloc de liaison (33).

9. Un procédé de fonctionnement d'un mécanisme de verrouillage de la revendication 1 pour une machine à café, comprenant les étapes suivantes :
le fait de comprimer une plaque de commande (10) vers le bas afin d'entraîner un bloc de pression (30) afin qu'il se déplace vers le bas le long d'un élément de guidage agencé longitudinalement ;
le fait de maintenir le bloc de pression (30) en déplacement vers le bas sous une action d'une position de liaison de guidage agencée obliquement et d'un élément de guidage,
et d'exercer une force sur un disque de verrouillage de rotation (40) afin d'entraîner le disque de verrouillage de rotation (40) afin qu'il tourne ;
le fait d'être soumis à une pression vers le bas par le disque de verrouillage de rotation (40) à partir du bloc de pression (30) durant un déplacement vers le bas du bloc de pression (30), comprimant le disque de verrouillage de rotation (40) sur la base de support (20) ; et
après que le disque de verrouillage de rotation (40) a tourné, le fait de mettre en prise le bloc de verrouillage (41) sur le disque de verrouillage de rotation (40) et la rainure de verrouillage (21) sur la base de support (20) l'un avec l'autre afin de verrouiller la machine à café (91).
